# EUROPEAN PATENT APPLICATION

(11) **EP 4 656 043 A1**
(43) Date of publication of application: **03.12.2025**
(21) Application number: 25176548.3
(22) Date of filing: 15.05.2025
(51) Int. Cl.: A01M 7/00, A01C 23/00, B05B 12/00, B05B 12/08, B05B 15/658

(54) **METHODS OF OPERATING A PULSE WIDTH MODULATION VALVE, AND RELATED AGRICULTURAL MACHINES AND MONITORING SYSTEMS**

(30) Priority: 23.05.2024 US 202463651059 P
(71) Applicant: Intelligent Agricultural Solutions LLC, Fargo, ND 58102 (US)
(72) Inventor: Ehresmann, Michael, Fargo (US); Bjertness, Dan, Fargo (US); Zietz, John Michael, Fargo (US); Cederberg, Dan, Fargo (US); Vanhoever, Lucas, Fargo (US)
(74) Representative: AGCO Intellectual Property Department

(57) **Abstract**

An agricultural machine includes a chassis, a product tank containing a fluid, and a fluid distribution system in fluid communication with the product tank. The fluid distribution system includes at least one fluid outlet line configured to deliver a fluid to an agricultural field, at least one pulse width modulation valve in fluid communication with the at least one fluid outlet line, and at least one pressure sensor upstream of the at least one pulse width modulation valve, the at least one pressure sensor configured to measure a fluid pressure proximate the at least one pulse width modulation valve. The agricultural machine further includes a monitoring system configured to determine at least one of a duty cycle or a modulation frequency of the at least one pulse width modulation valve based on the fluid pressure. Related methods and monitoring systems are also disclosed.

## Description

### CROSS-REFERENCE TO RELATED APPLICATION

N/A

### FIELD

Embodiments of the present disclosure relate generally to a method of determining a duty cycle and/or a modulation frequency of a pulse width modulation valve using a pressure sensor upstream of the pulse width modulation valve, and to related agricultural machines and monitoring systems.

### BACKGROUND

High crop yields of modern agribusiness may require application of fertilizers, pesticides, fungicides, and/or herbicides. These chemicals are dispersed onto high-acreage fields using specialized machines mounted on or towed by a vehicle. An example of such a machine is a self-propelled crop sprayer.

A common design for a self-propelled crop sprayer includes a chassis with a tank, boom arms, and nozzles connected to the boom arms. The tank contains liquid product, such as fertilizers, pesticides, fungicides, and/or herbicides. Boom arms extend outward from the sides of the chassis. Boom plumbing contains supply lines and nozzles spaced along the length of the boom arms at a spacing corresponding to the spray pattern of the nozzles. In operation, as the crop sprayer crosses the field, liquid is pumped from the tank through the supply lines along the boom arms, and out through the nozzles. This allows the self-propelled sprayer to distribute the liquid along a relatively wide path. The length of conventional boom arms may vary from, for example, 6 meters (18 feet) up to 46 meters (150 feet), but shorter or longer booms are possible. The boom arms typically swing in for on-road transport and out for field-spraying operations.

Conventionally, the nozzles are connected in series such that the product flows through a pipe and/or hose from one nozzle to another. Booms have been of the "wet boom" type, where the boom comprises a frame member with a pipe mounted thereon, and the liquid passes through the pipe into nozzles mounted on the pipe and liquidly connected thereto, or a "dry boom" type, where the nozzles are mounted to the frame member and liquid passes to the nozzles through a hose which is connected between the nozzles. The nozzles are attached to the pipe or frame with brackets at desired intervals along the boom arm.

While spraying with the crop sprayer, it is desirable to monitor the application rate of the chemicals being applied, which depends on the flowrate of the chemicals through the nozzles, and the speed of the nozzles relative to the ground and/or crops to which the chemicals are applied (e.g., the ground speed). Overuse of chemicals can lead to product waste, while underuse may cause an area to be inadequately treated, leading to reduced crop yields. In addition, it is desirable to maintain a uniform spray pattern from the nozzles to facilitate uniform application of the chemicals to the ground and/or crops.

### BRIEF SUMMARY

According to an aspect of the disclosure, an agricultural machine includes a chassis, a product tank containing a fluid, and a fluid distribution system in fluid communication with the product tank. The fluid distribution system includes at least one fluid outlet line configured to deliver a fluid to an agricultural field, at least one pulse width modulation valve in fluid communication with the at least one fluid outlet line, and at least one pressure sensor upstream of the at least one pulse width modulation valve. The at least one pressure sensor is configured to measure a fluid pressure proximate the at least one pulse width modulation valve. The agricultural machine further includes a monitoring system configured to determine a duty cycle and/or a modulation frequency of the at least one pulse width modulation valve based on the fluid pressure.

The agricultural machine may include a crop sprayer. In some aspects, the crop sprayer includes a boom comprising at least one boom arm configured to laterally extend from the chassis, and at least one fluid outlet line is operably coupled to the at least one boom arm. The boom arm(s) may comprise a plurality of sprayer nozzle assemblies, each operably coupled to a pulse width modulation valve. For example, the at least one pulse width modulation valve may include a plurality of pulse width modulation valves. The boom arm(s) may include a plurality of sprayer nozzle assemblies, each sprayer nozzle assembly operably coupled to one of the pulse width modulation valves of the plurality of pulse width modulation valves.

In some embodiments, each sprayer nozzle assembly comprises a flow sensor. The flow sensor may include an optical sensor configured to measure a frequency about which a projectile rotates within a housing of the sprayer nozzle assembly.

In some embodiments, the agricultural machine comprises an agricultural implement comprising row units, at least one of which is in fluid communication with the fluid distribution system. Each row unit comprises a conduit in fluid communication with the fluid distribution system and the pulse width modulation valve.

In some aspects, a flow sensor is in fluid communication with the pulse width modulation valve and the conduit and configured to measure a flowrate of fluid through the at least one pulse width modulation valve.

In some embodiments, the monitoring system is configured to determine a flowrate of the fluid flowing through the at least one pulse width modulation valve based on a measured flowrate and the duty cycle and/or the modulation frequency of the at least one pulse width modulation valve.

In some aspects, the chassis is supported by ground-engaging elements, such as wheels.

In some embodiments, the at least pressure sensor is within a sensor assembly directly coupled to the at least one pulse width modulation valve.

In some embodiments, the agricultural machine further comprises an accelerometer configured to measure an acceleration of the at least one pulse width modulation valve and/or a magnetometer in operable communication configured to measure at least one magnetic property caused by actuation of the at least one pulse width modulation valve.

The monitoring system may be configured to determine the duty cycle and/or the modulation frequency of the at least one pulse width modulation valve based on the acceleration of the at least one pulse width modulation valve and/or the at least one magnetic property.

In some aspects, the monitoring system is configured to compare the duty cycle and/or the modulation frequency based on the fluid pressure to the duty cycle and/or the modulation frequency based the acceleration of the at least one pulse width modulation valve and/or the at least one magnetic property.

In some embodiments, the at least one fluid outlet line comprises a plurality of fluid outlet lines. The at least one pulse width modulation valve comprises a plurality of pulse width modulation valves. Each of the fluid outlet lines is in fluid communication with one of the pulse width modulation valves. The at least one pressure sensor may include a plurality of pressure sensors. Each pressure sensor is operably coupled to one of the pulse width modulation valves.

In some embodiments, a method of operating a pulse width modulation valve comprises measuring pressure data indicative of a fluid pressure with a pressure sensor upstream of a pulse width modulation valve, the pulse width modulation valve in fluid communication with a fluid distribution line, and based on the measured pressure, determining a duty cycle and/or a modulation frequency of the pulse width modulation valve.

In some aspects, measuring pressure data comprises measuring the fluid pressure within a sensor housing directly coupled to the pulse width modulation valve.

Measuring the pressure data may include measuring the fluid pressure with a pressure sensor between the pulse width modulation valve and an inlet of a sensor housing in fluid communication with the fluid distribution line.

The method may further include measuring a flowrate of the fluid to determine a measured flowrate.

In some aspects, the method further includes determining a corrected flowrate based on the measured flowrate and the at least one of the duty cycle or the modulation frequency of the pulse width modulation valve.

In some embodiments, the method further comprises measuring vibrations of the pulse width modulation valve and/or at least one magnetic property caused by actuation of the pulse width modulation valve.

The method may further include comparing the duty cycle and/or the modulation frequency determined based on the fluid pressure to a duty cycle and/or a modulation frequency determined based on the vibrations and/or the at least one magnetic property.

In some embodiments, the method further includes measuring, with a pressure sensor, a fluid pressure within each of a plurality of sensor assemblies each located upstream of a respective pulse width modulation valve, and based on the fluid pressure of each of the sensor assemblies, determining a duty cycle and/or a modulation frequency of the respective pulse width modulation valves.

Determining a duty cycle and/or a modulation frequency of the pulse width modulation valve may include determining the duty cycle and/or the modulation frequency of the pulse width modulation valve using pattern recognition.

In some embodiments, a monitoring system for an agricultural machine comprises at least one processor, and at least one non-transitory computer-readable storage medium storing instructions thereon that, when executed by the at least one processor, cause the monitoring system to receive, from a pressure sensor, a fluid pressure within a sensor housing upstream of a pulse width modulation valve of a fluid distribution system of the agricultural machine, and based on the fluid pressure, determine a duty cycle and/or a modulation frequency of the pulse width modulation valve.

In some embodiments, the instructions cause the monitoring system to measure a flowrate of fluid through the pulse width modulation valve.

In some aspects, the instructions cause the monitoring system to compensate the measured flowrate based on the at least one of the duty cycle or the modulation frequency of the pulse width modulation valve.

### BRIEF DESCRIPTION OF THE DRAWINGS

While the specification concludes with claims particularly pointing out and distinctly claiming what are regarded as embodiments of the present disclosure, various features and advantages may be more readily ascertained from the following description of example embodiments when read in conjunction with the accompanying drawings, in which:
FIG. 1 illustrates an agricultural vehicle in the form of a self-propelled crop sprayer;
FIG. 2 illustrates a portion of a spray boom of the crop sprayer shown in FIG. 1;
FIG. 3 is a simplified top view of another agricultural vehicle, in the form of a crop sprayer towed by a tractor;
FIG. 4A is a simplified perspective view of an agricultural implement;
FIG. 4B is a simplified cross-sectional view of a row unit of the agricultural implement of FIG. 4A;
FIG. 5A is a simplified perspective view of a nozzle assembly;
FIG. 5B is a simplified cross-sectional view of the nozzle assembly of FIG. 5A;
FIG. 5C is a simplified cross-sectional view of a sensor assembly of the nozzle assembly of FIG. 5A;
FIG. 5D is a simplified perspective view of the sensor assembly of FIG. 5C;
FIG. 5E is a simplified cross-sectional view of the sensor assembly of FIG. 5C;
FIG. 6 is a simplified flowchart of a method of determining a duty cycle and a modulation frequency of a pulse width modulation valve and determining a flowrate through a nozzle assembly of the pulse width modulation valve using an accelerometer;
FIG. 7 is a graph illustrating acceleration data of a pulse width modulation valve;
FIG. 8 is a simplified flowchart of a method of determining a duty cycle and a modulation frequency of a pulse width modulation valve and determining a flowrate through a nozzle assembly of the pulse width modulation valve using a magnetometer;
FIG. 9 is a graph illustrating magnetic data measured by a magnetometer associated with a pulse width modulation valve;
FIG. 10 is a simplified flowchart of a method of determining a duty cycle and a modulation frequency of a pulse width modulation valve and determining a flowrate through a nozzle assembly of the pulse width modulation valve using a pressure sensor;
FIG. 11 is a graph illustrating pressure data measured with a pressure sensor associated with a pulse width modulation valve; and
FIG. 12 is a schematic of a computer-readable storage medium including processor-executable instructions configured to embody one or more of the methods of determining at least one flow condition within a flow channel of an agricultural machine.

### DETAILED DESCRIPTION

The illustrations presented herein are not actual views of any agricultural machine or portion thereof, but are merely idealized representations to describe example embodiments of the present disclosure. Additionally, elements common between figures may retain the same numerical designation.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all elements to form a complete structure or assembly. Only those process acts and structures necessary to understand the embodiments of the disclosure are described in detail below. Additional conventional acts and structures may be used. The drawings accompanying the application are for illustrative purposes only, and are thus not drawn to scale.

As used herein, the terms "comprising," "including," "containing," "characterized by," and grammatical equivalents thereof are inclusive or open-ended terms that do not exclude additional, unrecited elements or method steps, but also include the more restrictive terms "consisting of" and "consisting essentially of" and grammatical equivalents thereof.

As used herein, the term "may" with respect to a material, structure, feature, or method act indicates that such is contemplated for use in implementation of an embodiment of the disclosure, and such term is used in preference to the more restrictive term "is" so as to avoid any implication that other, compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structure and the apparatus in a predetermined way.

As used herein, the singular forms following "a," "an," and "the" are intended to include the plural forms as well, unless the context clearly indicates otherwise.

As used herein, the term "and/or" includes any and all combinations of one or more of the associated listed items.

As used herein, spatially relative terms, such as "beneath," "below," "lower," "bottom," "above," "upper," "top," "front," "rear," "left," "right," and the like, may be used for ease of description to describe one element's or feature's relationship to another element(s) or feature(s) as illustrated in the figures. Unless otherwise specified, the spatially relative terms are intended to encompass different orientations of the materials in addition to the orientation depicted in the figures.

As used herein, the term "substantially" in reference to a given parameter, property, or condition means and includes to a degree that one of ordinary skill in the art would understand that the given parameter, property, or condition is met with a degree of variance, such as within acceptable manufacturing tolerances. By way of example, depending on the particular parameter, property, or condition that is substantially met, the parameter, property, or condition may be at least 90.0% met, at least 95.0% met, at least 99.0% met, or even at least 99.9% met.

As used herein, the term "about" used in reference to a given parameter is inclusive of the stated value and has the meaning dictated by the context (e.g., it includes the degree of error associated with measurement of the given parameter).

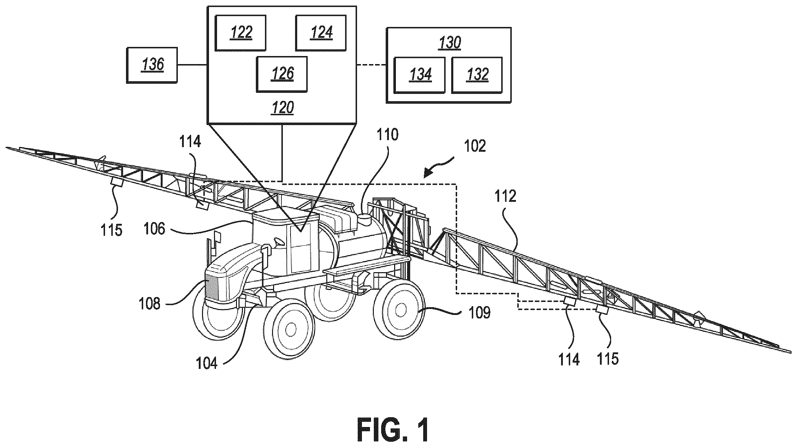

FIG. 1 shows an agricultural machine, such as a crop sprayer 102, used to deliver chemicals to agricultural crops in an agricultural field (also referred to herein as a "field"). As used herein, delivery of chemicals to an agricultural field may include delivering the chemicals to crops in the agricultural field. The crop sprayer 102 includes a chassis 104 supported by ground-engaging elements 109, such as wheels or tracks. The crop sprayer 102 may include an operator cab 106 mounted on the chassis 104. The operator cab 106 may house controls for the crop sprayer 102. An engine 108 may be mounted on a forward portion of the chassis 104 in front of the operator cab 106 or may be mounted on a rearward portion of the chassis 104 behind the operator cab 106. The engine 108 may be commercially available from a variety of sources and may include, for example, a diesel engine or a gasoline-powered internal combustion engine, a battery-powered electric motor, etc. The engine 108 provides energy to propel the crop sprayer 102 through a field on the ground-engaging elements 109 (e.g., wheels or tracks), and may also provide energy to spray fluids from the crop sprayer 102.

The crop sprayer 102 further includes a product tank 110 to store a fluid (e.g., a liquid, a gas) to be sprayed on the field. The fluid may include chemicals, such as but not limited to, herbicides, pesticides, fungicides, and/or fertilizers. The product tank 110 may be mounted on the chassis 104, either in front of or behind the operator cab 106. The crop sprayer 102 may include more than one product tank 110 to store different chemicals to be sprayed on the field. The stored chemicals may be dispersed by the crop sprayer 102 one at a time, or different chemicals may be mixed and dispersed together in a variety of mixtures. The product tank 110 may be a liquid tank (generally at atmospheric pressure) or a pressurized gas tank.

A boom 112 on the crop sprayer 102 is used to distribute the fluid from the product tank 110 over a wide swath as the crop sprayer 102 is driven through the field. The boom 112 may include two or more portions that can fold for transport on public roadways, and unfold (i.e., to the position shown in FIG. 1) for field operations.

The crop sprayer 102 includes a control system 120 (also referred to as a "central controller," a "flow control system," or a "valve control system") configured to facilitate one or more control operations of the crop sprayer 102. For example, the control system 120 may be configured to control spray operations of the crop sprayer 102, such as an application rate of product to be applied to crops and/or a field. The control system 120 includes an input/output (I/O) device 122, a valve controller 124 (also referred to as a "nozzle controller," a "flowrate controller," or a "sprayer controller"), and a computing system 126, such as a processor. The control system 120 may include one or more additional controllers for operating the crop sprayer 102, such as a controller for steering of the crop sprayer 102, a controller for adjusting the height of the chassis 104, and/or other controllers.

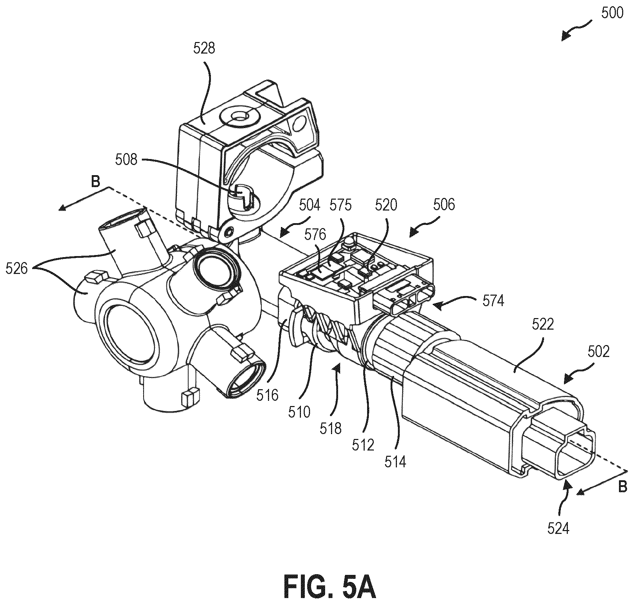

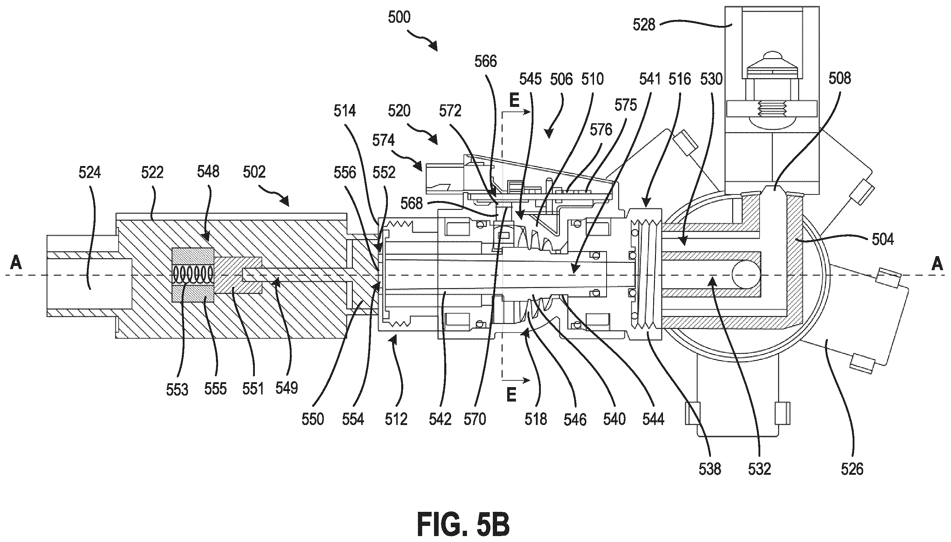

In addition, a sensor monitoring system 130 (also referred to as a "monitoring system," "a measurement system," or a "sensor management system") may be in operable communication with the control system 120. The sensor monitoring system 130 may include, for example, a computing system 132, and an I/O device 134. As described herein, the computing system 132 may be in operable communication with one or more sensor assemblies (e.g., sensor assemblies 506 (FIG. 5A through FIG. 5E)) of nozzle assemblies (e.g., nozzle assemblies 500 (FIG. 5A, FIG. 5B)) including one or more pulse width modulation valves to receive information indicative of at least one property (e.g., a flowrate, an acceleration (e.g., a vibration), at least one magnetic property (e.g., a magnetic field, a magnetic dipole moment), and/or a pressure) of the nozzle assemblies. In some embodiments, the sensor monitoring system 130 is in operable communication with the control system 120, such as by wireless or wired communication. In some embodiments, the sensor monitoring system 130 being separate from the control system 120 facilitates modification of an existing crop sprayer 102 including the control system 120 with the sensor monitoring system 130. In some embodiments, the control system 120 and the sensor monitoring system 130 are each located in the operator cab 106. In some embodiments, the sensor monitoring system 130 comprises a different device (e.g., a computing device) than the control system 120.

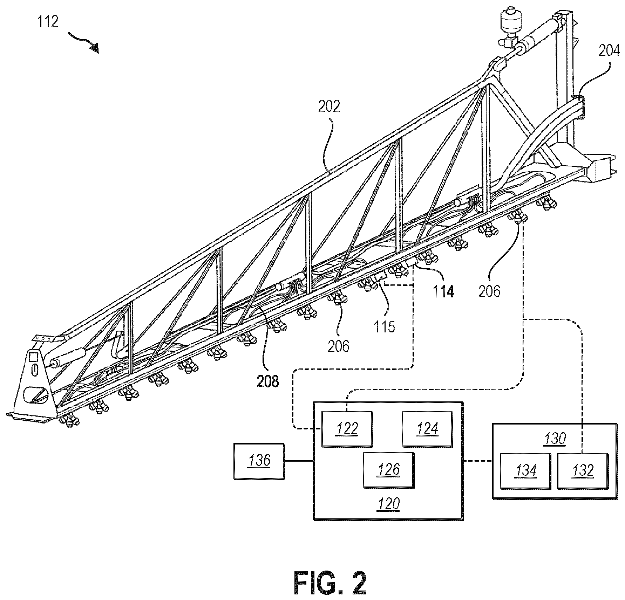

In some embodiments, the crop sprayer 102 includes an accelerometer 114 and/or a magnetometer 115 operably coupled to at least a portion thereof. The accelerometer 114 and the magnetometer 115 may be operably coupled to, for example, the boom 112. In some embodiments, each boom arm (e.g., boom arm 202 (FIG. 2)) includes an accelerometer 114 and a magnetometer 115 operably coupled thereto. In other embodiments, the accelerometer 114 and/or the magnetometer 115 are operably coupled to another portion of the crop sprayer 102, such as to the chassis 104. Each of the accelerometer 114 and the magnetometer 115 may be in operable communication with the control system 120, such as with the computing system 126. The magnetometer 115 may be configured to measure at least one magnetic property, such as a magnetic field of the Earth (e.g., changes in the magnetic field of the Earth, a magnetic moment (e.g., magnetic dipole moment), another magnetic property). As described in additional detail herein, the computing system 126 may be configured to determine an acceleration of the crop sprayer 102 based on data from the accelerometers 114 and a relative orientation of the crop sprayer 102, the boom 112, and/or boom arms (e.g., boom arms 202 (FIG. 2)) relative to the Earth based on the magnetic property measured by the magnetometer 115. While FIG. 1 illustrates that the accelerometer 114 and the magnetometer 115 in operable communication with the control system 120, in some embodiments, the accelerometer 114 and/or the magnetometer are in operable communication with the sensor monitoring system 130.

In some embodiments, the control system 120 is configured to determine a vibration of the boom arms based on data from the accelerometers 114. In some embodiments, the accelerometers 114 comprise a tri-axial accelerometer. In addition, the magnetometers 115 my each include a tri-axial magnetometer (also referred to as a three-axis magnetometer). In some embodiments, the magnetometers 115 comprise a single-axis magnetometer or a two-axis magnetometer. The magnetometers 115 may be vector magnetometers or scalar magnetometers and may be configured to measure one or more of (e.g., each of) the direction, the strength, and the relative change of the magnetic property (e.g., the magnetic field).

The crop sprayer 102 may further include a global positioning system ("GPS") receiver 136 mounted to the crop sprayer 102 and operably connected to (e.g., in communication with) the control system 120. The GPS receiver 136 may provide GPS data to the control system 120, such as during traversal of the crop sprayer 102 in a forward direction and during application of product through nozzle assemblies to determine an application rate of the product. In some embodiments, the GPS receiver 136 is configured to determine the relative orientation of the crop sprayer 102.

Each of the I/O device 122 and the I/O device 134 may be configured to display information to an operator of the crop sprayer 102. For example, the I/O device 122 may include a user interface through which the operator activates steering control of the crop sprayer 102, control of the boom 112, or control of fluid flow from the product tank 110 to nozzle assemblies)), as described in further detail herein. The I/O device 134 may be configured to display information related to the nozzle assemblies and/or the sensor assemblies to the operator. Each of the I/O device 122 and the I/O device 134 may include a graphical user interface (GUI) configured to display one or more operating conditions of the respective crop sprayer 102, the nozzle assemblies, and/or the sensor assemblies to the operator.

FIG. 2 is a simplified perspective view of a portion of a boom arm 202 of the boom 112. Fluid is conveyed from the product tank 110 (FIG. 1) by a fluid distribution system 204 to various fluid outlet lines 208, each in fluid communication with a nozzle assembly 206 spaced along the boom 112. The fluid distribution system 204, which may be mounted on the boom arm 202, includes at least one supply line and a recirculation line connected to the product tank 110 (FIG. 1).

In FIG. 2, one of the nozzle assemblies 206 is shown in operable communication with each of the control system 120 and the sensor monitoring system 130. For example, the nozzle assembly 206 may be in operable communication with each of the computing system 126 of the control system 120 and the computing system 132 of the sensor monitoring system 130. In some embodiments, a sensor assembly (e.g., sensor assembly 506 (FIG. 5A through FIG. 5E)) of the nozzle assembly 206 is in operable communication with the sensor monitoring system 130 for communicating with sensors of the nozzle assembly and determining one or more properties of a valve (e.g., a duty cycle and/or a modulation frequency of the valve); and the valve (e.g., valve 502 (FIG. 5A, FIG. 5B)) of the nozzle assembly 206 is in operable communication with the control system 120 for controlling one or more control operations of the nozzle assembly 206. While only one of the nozzle assemblies 206 is shown in operable communication with the control system 120 and the sensor monitoring system 130, it will be understood that each of the nozzle assemblies 206 may be in operable communication with the sensor monitoring system 130.

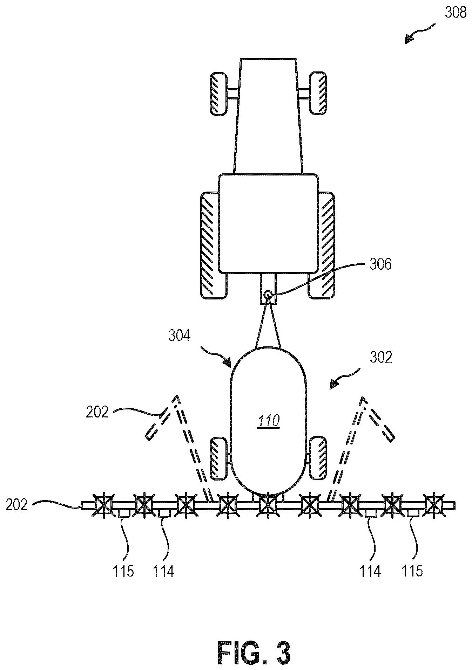

FIG. 3 shows another crop sprayer 302 that may be used to deliver chemicals to agricultural crops in a field. The crop sprayer 302 is a pull-type sprayer including a chassis 304 carrying a product tank 110. The crop sprayer 302 has a hitch 306 configured to couple the chassis 304 to a tractor 308. The tractor 308 may therefore pull the crop sprayer 302 through the field, and the operator of the tractor 308 may operate the crop sprayer 302 via a control system (similar to the control system 120 (FIG. 1, FIG. 2)) and receive measurements from the crop sprayer 302 via a sensor monitoring system (similar to the sensor monitoring system 130 (FIG. 1, FIG. 2)) in the cab of the tractor 308. The boom arms 202 may fold for road transport (indicated by dashed lines in FIG. 3). The crop sprayer 302 includes a fluid distribution system 204, as in FIG. 2 and described in further detail below. The crop sprayer 302 may further include at least one accelerometer 114 and/or at least one magnetometer 115, as described above with reference to the crop sprayer 102. For example, at least one accelerometer 114 and at least one magnetometer 115 is attached to each boom arm 202. In other embodiments, an accelerometer 114 and/or a magnetometer 115 are coupled to the chassis 104, 304 of the crop sprayer 102, 302.

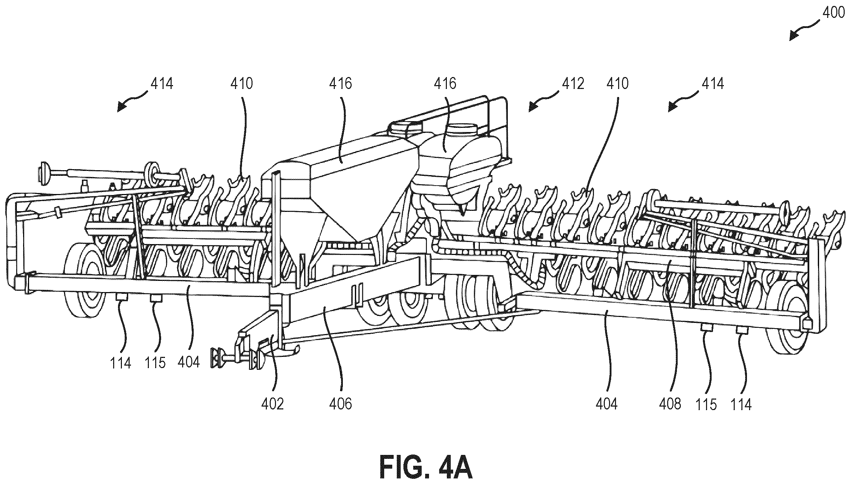

FIG. 4A shows an agricultural machine that may be used to deliver chemicals to agricultural crops in a field. The agricultural machine may include an agricultural implement 400 comprising a pull-type agricultural planter configured to be propelled (e.g., pulled) by a towing vehicle (e.g., a prime mover), such as a tractor (e.g., tractor 308 (FIG. 3)) via hitch 402. The agricultural implement 400 includes a frame 404 pivotably coupled to a toolbar 408. The frame 404 further includes a drawbar 406 extending from the hitch 402 towards the portion of the frame 404 extending parallel to the toolbar 408. The toolbar 408 may comprise a rigid support structure supporting row units 410. The row units 410 may be any type of ground-engaging device for planting, fertilizing, or otherwise working crops or soil, typically in rows. For example, the row units may be substantially similar to the row units described in International Patent Publication WO 2021/205245 A1, "Agricultural Implements Having Row Unit Position Sensors and at Least One Adjustable Wheel, and Related Control Systems and Methods," published October 14, 2021.

The toolbar 408 may be divided into three sections: a center portion 412 and two wing portions 414 connected to opposite lateral ends of the center portion 412. Each of the wing portions 414 may be pivotably attached to the center portion 412. The wing portions 414 may be configured to extend from a folded configuration to the extended configuration illustrated in FIG. 4A during, for example, application of fertilizer (e.g., liquid fertilizer, gaseous fertilizer). While FIG. 4A illustrates that the toolbar 408 includes three sections, the disclosure is not so limited. In other embodiments, the toolbar 408 may include a single section, two sections, five sections, or any other number of sections.

In some embodiments, the frame 404 (e.g., such as the portion of the frame 404 within the center portion 412) supports one or more product tanks 416. The product tanks 416 may be configured to carry, for example, fertilizer to be applied to the crops and/or field via the row units 410. In some embodiments, the frame 404 may carry one or more additional pieces of equipment, such as one or more product containers, control components, pumps, and reservoirs (e.g., fertilizer and/or pesticide reservoirs). In some embodiments, at least one accelerometer 114 and/or at least one magnetometer 115 is attached to the agricultural implement 400, such as to the frame 404.

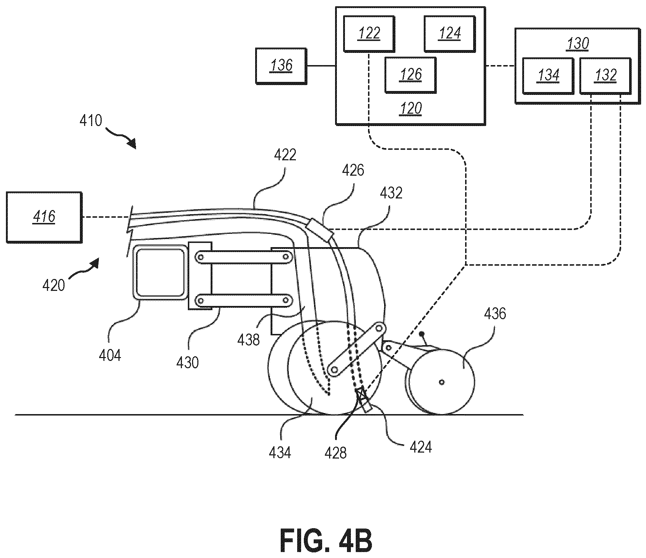

FIG. 4B shows a row unit 410 in fluid communication with a fluid distribution system 420. In some embodiments, the frame 404 and/or the toolbar 408 carry the fluid distribution system 420. The fluid distribution system 420 includes the product tank 416 and a first conduit 422 extending through the row unit 410 and including a fluid outlet line 424 for delivering fluid to the field and/or crops, such as to a furrow. The first conduit 422 may be in fluid communication with a flow sensor 426 configured to measure a flowrate of the fluid through the first conduit 422. The first conduit 422 may be in fluid communication with a pulse width modulation valve 428 that is in operable communication with at least one of the control system 120 or the sensor monitoring system 130. In some embodiments, the flow sensor 426 is in operable communication with the sensor monitoring system 130.

With continued reference to FIG. 4B, in some embodiments, each row unit 410 is attached to the frame 404 by a parallel linkage 430. The row units 410 may include a body 432 carrying the ground-engaging tools 434 (e.g., opener discs, a shank, etc.) and the packing wheels 436. The row units 410 include a second conduit 438 for delivering particulate material (e.g., solid fertilizer, seeds) to the field and/or crops.

FIG. 5A is a simplified perspective view of a nozzle assembly 500. FIG. 5B is a simplified cross-sectional view of the nozzle assembly 500 taken through section line B-B of FIG. 5A. Each of the nozzle assemblies 206 (FIG. 2) may correspond to and be substantially the same as the nozzle assembly 500. In some embodiments, the nozzle assemblies 500 are substantially similar to the spray nozzles described in International Patent Publication WO 2021/067739 A2, "Parameter Sensing for a Liquid Applicator," published April 8, 2021, except that the nozzle assemblies 500 may each include an accelerometer (e.g., accelerometer 575 (FIG. 5B) and/or a magnetometer 576 (FIG. 5B)). The nozzle assembly 500 includes a valve 502, a body 504, and a sensor assembly 506 between the valve 502 and the body 504. An inlet port 508 fluidly couples the nozzle assembly 500 to the fluid distribution system, such as the fluid distribution system 204 or the fluid distribution system 420. By way of non-limiting example, in some embodiments, the nozzle assembly 500 may be coupled to the fluid outlet lines 208, 424. The nozzle assembly 500 may include a clamp 528 configured to operably couple the body 504 to the fluid distribution system.

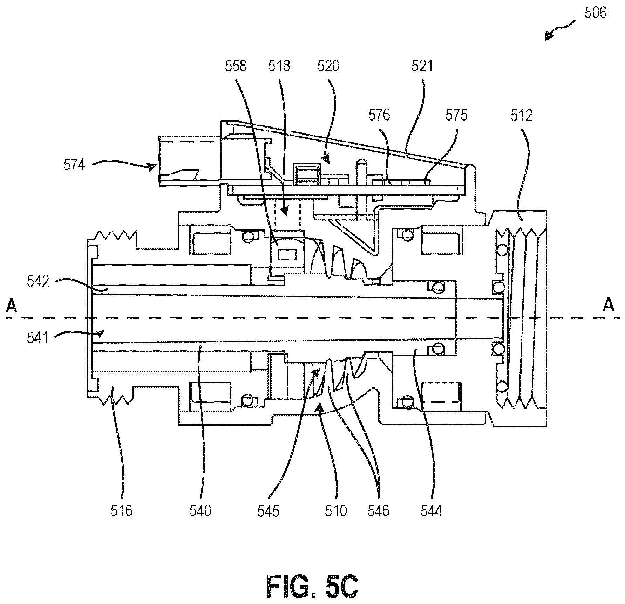

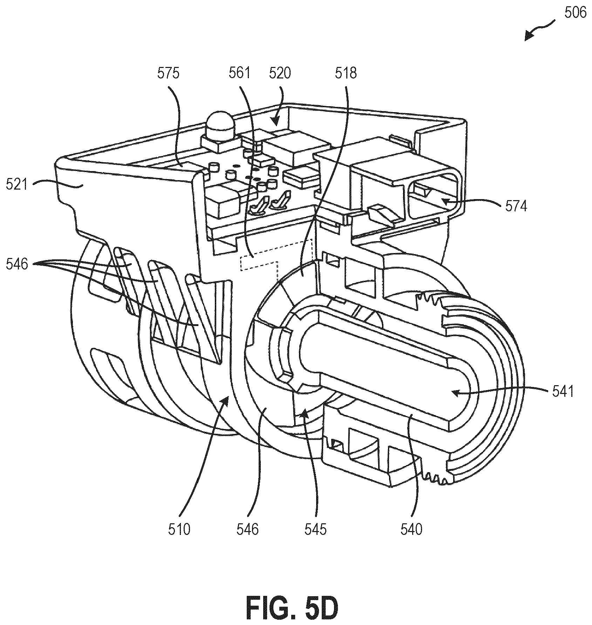

FIG. 5C is a simplified cross-sectional view of a portion of the sensor assembly 506 taken about section line B-B of FIG. 5A and showing an enlarged portion of the sensor assembly 506 relative to that illustrated in FIG. 5B. FIG. 5D is a simplified perspective cutaway view of the sensor assembly 506. Collectively referring to FIG. 5A through FIG. 5D, the sensor assembly 506 includes a sensor housing 510 including a first end 512 operably coupled to the valve 502 at a connector 514, and a second end 516 operably coupled to the body 504. The sensor assembly 506 includes sensor circuitry 520 configured to sense (e.g., measure) one or more parameters of the nozzle assembly 500, such as a flowrate of the fluid through the nozzle assembly 500 and/or a pressure of the fluid through the nozzle assembly 500. For example, the sensor assembly 506 includes a flow sensor 518 configured to measure a flowrate of fluid through the nozzle assembly 500 (e.g., through the valve 502). The sensor circuitry 520 may be configured to provide the measured flowrate to the sensor monitoring system 130 (FIG. 1, FIG. 2, FIG. 4B), such as to the computing system 132 (FIG. 1, FIG. 2, FIG. 4B). The sensor assembly 506 (e.g., the sensor circuitry 520) may be in operable communication with the sensor monitoring system 130 via a wired connection through port 574. The sensor circuitry 520 is located within circuitry housing 521 (FIG. 5C, FIG. 5D). In addition to the flow sensor 518, in some embodiments, the sensor assembly 506 includes an accelerometer 575 and a magnetometer 576. As described in additional detail herein, the accelerometer 575 may be configured to measure an acceleration of a portion of the nozzle assembly 500 (e.g., of the valve 502). The magnetometer 576 may be configured to measure at least one magnetic property (e.g., a magnetic field, a magnetic dipole moment), which may be indicative of an operation of the nozzle assembly 500 (e.g., of the valve 502). The acceleration and/or the magnetic property may be used by the sensor monitoring system to 130 to determine a duty cycle and/or a modulation frequency of the valve 502.

Fluid is configured to enter the nozzle assembly 500 at the inlet port 508, travel through the sensor assembly 506 towards the valve 502, and from the valve 502 back through the sensor assembly 506 to the body 504 and to a turret 526, which may be operably coupled to a spray tip to deliver the fluid from the nozzle assembly 500. An orifice of the spray tip is configured to atomize the fluid to generate the fluid spray from the nozzle assembly 500. The nozzle assembly 500 may include multiple turrets 526, each including an associated spray tip and an orifice of a different configuration (e.g., size, shape) to generate different spray patterns.

Referring to FIG. 5B, the body 504 is fluidly coupled to the inlet port 508 and includes a first flow path 530 configured to receive the fluid from the inlet port 508. After traveling through the sensor assembly 506 to the valve 502, and returning from the valve 502 back through the sensor assembly 506, the fluid travels out of the body 504 via a second flow path 532. The second flow path 532 is configured to be in fluid communication with a desired one of the turrets 526. At least a portion of the first flow path 530 may be coaxial with the second flow path 532. Only one of the turrets 526 is fluidly connected to an outlet path of the nozzle assembly 500 at a given time and may be selected based on the desired flowrate and/or spray pattern to be emitted from the nozzle assembly 500.

The sensor housing 510 may be operably coupled to the body 504 at a connector 538, which may comprise a threaded connection. The sensor assembly 506 includes a central member 540 defining a central passage 541 extending from an inlet end 542 to an outlet end 544. The outlet end 544 is in fluid communication with the second flow path 532 of the body 504. The sensor housing 510 a vortex flow path 545 defined by inner walls 546 of the sensor housing 510 extending radially inward from the sensor housing 510 to the central member 540. The inner walls 546 may include, for example, splines.

The central member 540 may fluidly separate the vortex flow path 545 from the central passage 541. In some embodiments, upon entering the body 504, the fluid travels along the first flow path 530 to the sensor assembly 506 and into the vortex flow path 545 defined by the inner walls 546 of the sensor housing 510. Upon passing through the vortex flow path 545, the fluid passes by valve 502 and into the central passage 541 at the inlet end 542.

Referring to FIG. 5A and FIG. 5B, the valve 502 includes a valve body 522 coupled to the sensor assembly 506 at the second end 516. A port 524 is configured to receive a connector (e.g., an electrical connector) to provide power and/or communication to the valve 502. In some embodiments, the port 524 facilitates operable communication between the valve 502 and the control system 120 ((FIG. 1, FIG. 2, FIG. 4B) and/or the sensor monitoring system 130 (FIG. 1, FIG. 2, FIG. 4B), such as the valve controller 124 (FIG. 1, FIG. 2, FIG. 4B) the computing system 126 (FIG. 1, FIG. 2, FIG. 4B) and/or the computing system 132 (FIG. 1, FIG. 2, FIG. 4B). The valve 502 includes an actuator 548 (FIG. 5B) configured to drive reciprocation of a valve member 550 (FIG. 5B) within the valve body 522 responsive to instructions from the valve controller 124. In some embodiments, the port 524 is in operable communication with the sensor monitoring system 130, which receives instructions from the control system 120, such as from the valve controller 124.

The valve 502 includes a stem 549 operably coupled to the valve member 550. The actuator 548 may comprise a solenoid and an armature 551 operably coupled to the stem 549. A spring 553 may be operably coupled to the armature 551 and surrounded by a coil 555 configured to drive reciprocation of the armature 551 to open and close the valve 502 by moving the valve member 550 operably coupled to the stem 549. The coil 555 may be operably coupled to an external power supply, such as via port 524.

Actuation of the valve 502 by the actuator 548 includes applying a magnetic field (e.g., caused by electric current flowing through the coil 555) to cause reciprocation of the armature 551 along axis A-A. The coupled stem 549 causes the valve member 550 to reciprocate in the same direction as the armature 551 to open and close a flow pathway between a valve inlet 552 and a valve outlet 554. In some embodiments, the valve 502 may be controllable to vary the duty cycle and/or the frequency of reciprocation of the valve member 550 (e.g., the modulation frequency) to control one or more flow properties (e.g., the flowrate, the flow pattern) of the fluid from the nozzle assembly 500. For example, the valve 502 may be in operable communication with the valve controller 124 (FIG. 1, FIG. 2, FIG. 4B) to control the operation of the valve 502 to control the flowrate of the fluid through the nozzle assembly 500. In other embodiments, the duty cycle and modulation frequency may be adjusted by an internal control system of the actuator 548 based on the flowrate of the fluid through the valve 502.

The nozzle assembly 500, such as the sensor assembly 506, includes the accelerometer 575 configured to measure an acceleration (e.g., a vibration) of the nozzle assembly 500, such as of the actuator 548. The nozzle assembly 500 further includes the magnetometer 576 configured to measure a magnetic property (e.g., a magnetic field, changes in the magnetic field, a magnetic moment (e.g., magnetic dipole moment), a magnetic flux density, and/or another magnetic property) proximate the valve 502 caused by the actuator 548 during operation of the valve 502. The vibrations caused actuation of the valve 502 may be measured by the accelerometer 575 and the magnetic field induced by the actuator 548 (e.g., the solenoid) during actuation may be measured by the magnetometer 576. Thus, the vibration and the magnetic property may correspond to actuation of the actuator 548 (and opening and closing of the flow pathway).

In some embodiments, the valve 502 comprises a pulse width modulation (PWM) valve. The valve 502 may be configured to generate turbulence in the fluid flow as the valve 502 pulses between an open state and a closed state. For example, the inner walls 546 and the central member 540 may form helical flow paths defining the vortex flow path 545. The vortex flow path 545 create a cyclonic flow effect that induces rotation of a projectile 558 about the axis A-A.

A seat 556 is positioned between the valve member 550 and the sensor assembly 506. When the valve 502 is in the open position, the actuator 548 may be retracted and the valve member 550 may not contact the seat 556 such that the flow path between the valve inlet 552 and the valve outlet 554 is open. When the valve 502 is in the closed position, the actuator 548 causes the valve member 550 to contact the seat 556 and close the flow path between the valve inlet 552 and the valve outlet 554.

The flowrate of the fluid through the valve 502 may be controlled by adjusting a flowrate from the product tank 110 to the nozzle assembly 500. In some embodiments, pulsing the valve 502 maintains the integrity and quality of the spray pattern generated by the nozzle assembly 500 across a range of flowrates. The duty cycle and the modulation frequency of the valve 502 may affect the flowrate of the fluid through the valve 502. However, the duty cycle and the modulation frequency of the valve 502 may not be readily available. For example, the duty cycle and modulation frequency may be proprietary information of the manufacturer of the valve 502. As described herein, the accelerometer 575, the magnetometer 576, and/or a pressure sensor 566 facilitates determining at least one of (e.g., both of) the duty cycle and the modulation frequency of the valve 502.

As described above, each of the accelerometer 575 and the magnetometer 576 may be located within the sensor housing 510. The accelerometer 575 and the magnetometer 576 may comprise a portion of the sensor circuitry 520 and be located within the circuitry housing 521. The accelerometer 575 may be configured to measure acceleration (e.g., vibrations) of the valve 502 and/or nozzle assembly 500. For example, the accelerometer 575 may measure the vibrations of the valve 502 in one or more directions. In some embodiments, the accelerometer 575 measures the acceleration in the same direction as the direction of travel of the valve member 550. The accelerometer 575 may be rigidly coupled to the valve 502 (such as by means of the sensor assembly 506). For example, since the sensor assembly 506 is operably coupled (e.g., directly coupled, rigidly coupled) to the valve 502, acceleration (e.g., vibrations) of the valve 502 caused by actuation of the actuator 548 causes vibrations in the sensor assembly 506, such as in the circuitry housing 521 housing the accelerometer 575. Accordingly, vibrations of the valve 502 may be transferred to the sensor assembly 506 and measured by the accelerometer 575 in the circuitry housing 521. Thus, the accelerometer 575 may be configured to measure vibrations of the sensor housing 510, which may correspond to (e.g., be equal to, be substantially equal to) the vibrations of the valve 502 caused by actuation of the valve 502.

The magnetometer 567 may be configured to measure at least one magnetic property (e.g., a magnetic field) proximate the valve 502 and/or nozzle assembly 500. For example, the magnetometer 576 may measure the magnetic field, which may be indicative of the operation of the valve 502, such as actuation of the valve 502 (e.g., application of an electrical current to the coil 555 to induce a magnetic field and cause the valve member 550 to reciprocate. The magnetic property may be measured in one or more directions. In some embodiments, the magnetic property is measured in the same direction as the direction of travel of the valve member 550.

The magnetometer 576 may be rigidly coupled to the valve 502 (such as by means of the sensor assembly 506). The magnetometer 576 may be proximate the valve 502 such that the magnetometer 576 measures at least one magnetic property (e.g., a magnetic field, a magnetic dipole moment) of the valve 502 caused by actuation of the actuator 548. Accordingly, the magnetic field and/or magnetic dipole moment induced by actuation of the actuator 548 may be measured by the magnetometer 576, which may correspond to opening and closing of the valve 502.

The sensor housing 510 may include a pressure sensor 566. The pressure sensor 566 may be located upstream of the valve 502 and may be configured to measure the pressure of the fluid in the sensor housing 510. As described below, actuation of the valve 502 may induce changes in the fluid pressure (e.g., a water hammer effect), which may be measured by the pressure sensor 566 upstream of the valve 502 (e.g., upstream of the valve member 550).

Each of the accelerometer 575, the magnetometer 576, and the pressure sensor 566 may be proximate the valve 502 such that the accelerometer 575, magnetometer 576, and pressure sensor 566 measures the respective vibrations, the magnetic property(ies), and fluid pressure induced by the actuation of the valve 502. In some embodiments, and by way of non-limiting example, each of the accelerometer 575, the magnetometer 576, and the pressure sensor 566 may be less than 1 meter, such as less than about 50 cm, less than about 40 cm, less than about 30 cm, less than about 20 cm, or less than about 10 cm from the valve 502.

In some embodiments, each of the accelerometer 575, the magnetometer 576, and the pressure sensor 566 is in in operable communication with the sensor monitoring system 130, such as the computing system 132 of the sensor monitoring system 130, via port 574. Each of the accelerometer 575, the magnetometer 576, and the pressure sensor 566 may be in operable communication with the sensor monitoring system 130 (e.g., the computing system 132) via wired (through port 574) or wireless means.

In other embodiments, the accelerometer 575 and/or the magnetometer 576 are directly coupled to another portion of the nozzle assembly 500. For example, the accelerometer 575 and/or magnetometer 576 may be coupled to the valve 502. By way of non-limiting example, in some embodiments, the accelerometer 575 and/or magnetometer 576 are directly coupled to the actuator 548.

The accelerometer 575 may include a single-axis accelerometer, the axis of the accelerometer 575 parallel with the direction in which the valve member 550 is reciprocated (e.g., parallel to the A-A axis). In other embodiments, the accelerometer 575 comprises a bi-axial accelerometer or a triaxial accelerometer. In some embodiments, the accelerometer 575 is a triaxial accelerometer and one of the axes of the accelerometer 575 is aligned with (e.g., parallel with, colinear with) the direction of travel of the valve member 550 or the actuator 548. In some embodiments, an axis of the accelerometer 575 is parallel with an axis of the accelerometer 114 (FIG. 1 through FIG. 4A) coupled to the boom arm 202 (FIG. 2, FIG. 3) or the frame 404 (FIG. 4A) to which the nozzle assembly 500 is coupled.

The magnetometer 576 may include a single-axis magnetometer, the axis of the magnetometer 576 parallel with the direction in which the valve member 550 is reciprocated (e.g., parallel to the A-A axis). In other embodiments, the magnetometer 576 comprises a bi-axial magnetometer or a triaxial magnetometer. In some embodiments, the magnetometer 576 is a triaxial magnetometer and one of the axes of the magnetometer 576 is aligned with (e.g., parallel with, colinear with) the direction of travel of the valve member 550 or the actuator 548. In some embodiments, an axis of the magnetometer 576 is parallel with an axis of the magnetometer 115 (FIG. 1 through FIG. 4A) coupled to the boom arm 202 (FIG. 2, FIG. 3) or the frame 404 (FIG. 4A) to which the nozzle assembly 500 is coupled.

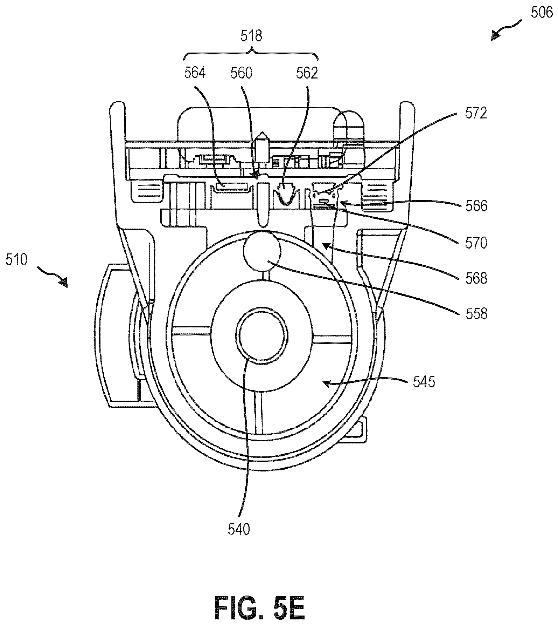

FIG. 5E is a simplified cross-sectional view of the sensor assembly 506 taken through section line E-E of FIG. 5B. With reference to FIG. 5E, a projectile 558 may be disposed within the sensor housing 510 within a portion of the vortex flow path 545. Responsive to exposure to fluid flow, the projectile 558 rotates within the vortex flow path 545 about the central member 540 (e.g., between the central member 540 and inner surfaces of outer walls of the sensor housing 510). The speed at which the projectile 558 rotates within the vortex flow path 545 is dependent on the flowrate of fluid through the sensor housing 510. The flow sensor 518 is configured to measure a flowrate of fluid within the sensor assembly 506 based on rotation of the projectile 558 about axis A-A (FIG. 5B) (e.g., about the central member 540).

The flow sensor 518 includes an optical sensor 560 configured to sense rotation of the projectile 558. For example, the optical sensor 560 may be configured to measure a frequency at which the projectile 558 rotates about the central member 540 within the vortex flow path 545. The optical sensor 560 may include an emitter 562 (e.g., a light-emitting diode) configured to emit electromagnetic radiation (e.g., light) towards the projectile 558 (e.g., through an optical sensor window 561 (FIG. 5D)), and an optical receiver (an optical sensor, such as a photodiode) 564 configured to measure the electromagnetic radiation (e.g., light) reflected from the projectile 558. The emitter 562 may emit electromagnetic radiation into the flowpath of the projectile 558 and the optical receiver 564 may sense the reflected electromagnetic radiation.

As the projectile 558 passes the optical emitter 562, the light from the optical emitter 562 is reflected by the projectile 558 and is sensed by the optical receiver 564. The optical receiver 564 may generate an output signal to the sensor circuitry 520 indicating passes of the projectile 558. Flow data, such as a frequency at which the projectile 558 passes the optical sensor 560 (e.g., a pass count of the projectile 558), is generated and the flowrate can be determined based on the frequency. In some embodiments, the optical sensor 560 includes a proximity sensor. In some embodiments, flow sensor 518 can include a magnetic projectile 558 a proximity sensor, such as a Hall-effect sensor, to sense passes of the ball.

In addition to sensing the flowrate of fluid through the sensor assembly 506, the sensor assembly 506 may be configured to measure a pressure of the fluid in the valve 502, such as by measuring the pressure of the fluid in the sensor assembly 506. The pressure sensor 566 may be configured to measure a pressure of the fluid within the sensor assembly 506. As best seen in FIG. 5E, the pressure sensor 566 may be located upstream of the valve member 550. In other words, the fluid may pass from the inlet port 508 past the pressure sensor 566 in the nozzle assembly 500 prior to passing through the valve member 550. The pressure sensor 566 may include a pressure port 568 at which a diaphragm 570 is located. The diaphragm 570 may be exposed to the fluid in the sensor assembly 506, such as the fluid within the vortex flow path 545. The pressure sensor 566 includes a sensor component 572, which may include a piezoresistive or a piezoelectric component. Interaction of the diaphragm 570 on the sensor component 572 may be indicative of and correspond to a pressure of the pressure in the sensor assembly 506. In some embodiments, the pressure sensor 566 (e.g., the sensor component 572) is in operable communication with the sensor monitoring system 130 (FIG. 1, FIG. 2, FIG. 4B) to provide pressure data to the sensor monitoring system 130. Although the nozzle assembly 500 has been described and illustrated as including a particular type of pressure sensor 566, in other embodiments, the pressure sensor 566 comprises a different type of pressure sensor and/or is located at a different region of the nozzle assembly 500.

While the nozzle assembly 500 has been described and illustrated as having a particular configuration and orientation, the disclosure is not so limited. In other embodiments, the nozzle assembly 500 may be substantially similar to other spray nozzles (e.g., applicators 18') described in International Patent Publication WO 2021/067739 A2, or to the nozzles described in U.S. Patent Application 2022/0264865, "Hydraulic Spray Nozzle," published August 25, 2022.

As described above, the sensor assembly 506 includes the port 574 configured to receive a connector (e.g., an electrical connector) to provide power and/or communication to the sensor assembly 506. In addition, the port 574 may facilitate operable communication between the sensor assembly 506 (e.g., between each of the flow sensor 518 and the pressure sensor 566) and the sensor monitoring system 130 (FIG. 1, FIG. 2, FIG. 4B). In some embodiments, the port 574 facilitates operable communication between the sensor monitoring system 130 and each of the accelerometer 575, the magnetometer 576, and the pressure sensor 566. In other embodiments, the sensor monitoring system 130 is in operable communication with at least one of (e.g., each of) the accelerometer 575, the magnetometer 576, and the pressure sensor 566 wirelessly, or through the port 524 of the valve 502.

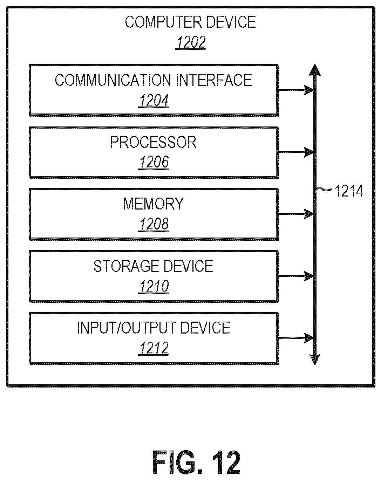

In use and operation, responsive to opening and closing of the valve 502, such as by actuation of the actuator 548 to cause the valve member 550 to reciprocate, fluid may flow from the inlet port 508, through the first flow path 530 of the body 504 to the sensor housing 510; through the vortex flow path 545 defined in the sensor housing 510 to the valve inlet 552; from the valve inlet 552 through the valve 502 to the valve outlet 554; from the valve outlet 554, through the central passage 541 of the central member 540 of the sensor housing 510 to the second flow path 532 of the body 504; and from the second flow path 532 out one of the turrets 526 and associated spray tips. As the fluid passes through the sensor housing 510, one or more flow properties of the fluid may be measured by the sensor assembly 506, such as the flowrate of the fluid through the sensor housing 510 or the pressure of the fluid in the sensor housing 510. In addition, as the valve member 550 is actuated by the actuator 548 to cause the valve member 550 to reciprocate, the accelerometer 575 measures the acceleration (e.g., the vibrations) of the nozzle assembly 500 (e.g., of at least one of the actuator 548, the valve member 550, the valve 502, the sensor housing 510, and/or the nozzle assembly 500), and the magnetometer 576 measures the at least one magnetic property (e.g., the magnetic field, the magnetic dipole moment) caused by (e.g., induced by) the valve 502 (e.g., the actuator 548). The measured vibrations, the measured magnetic property, and the fluid pressure are received by the sensor monitoring system 130 (FIG. 1, FIG. 2, FIG. 4B) (such as by a data manager of the sensor monitoring system (e.g., storage device 1210 (FIG. 12)). As described herein, the sensor monitoring system 130 is configured to determine a duty cycle and/or a modulation frequency of the valve 502 based on at least one of (e.g., two of, each of) the acceleration (e.g., vibrations) measured with the accelerometer 575, the magnetic property measured by the magnetometer 576, and the fluid pressure measured by the pressure sensor 566. In some embodiments, based on the duty cycle and/or the modulation frequency of the valve 502, a measured flowrate of the fluid measured with the flow sensor 518 may be corrected (e.g., compensated) to determine a corrected flowrate. In other words, in some embodiments, the duty cycle and/or the modulation frequency of the valve 502 may be used to determine a corrected flowrate of the fluid through the nozzle assembly 500.

In some embodiments, the duty cycle and/or the modulation frequency is compared to an instruction duty cycle, modulation frequency, and/or flowrate from the control system 120 (FIG. 1, FIG. 2) to the fluid distribution system (e.g., the fluid distribution system 204 of the boom arm 202 or the fluid distribution system 420 of the agricultural implement 400). If the duty cycle and/or the modulation frequency is different than expected based on the instruction duty cycle, modulation frequency, and/or flowrate, the sensor monitoring system 130 (FIG. 1, FIG. 2) may determine that the valve 502 is not operating as intended and provide a notification to an operator of the respective crop sprayer 102 or the agricultural implement 400.

he sensor assembly 506 may be configured to measure the one or more properties of the fluid (e.g., the flowrate, the pressure) and one or more properties of the valve 502 (e.g., the vibrations of the valve 502, the magnetic property(ies) induced by the valve 502). The sensor monitoring system 130 may be configured to receive the signals from the sensor assembly 506 (e.g., acceleration data from the accelerometer 575, magnetic data from the magnetometer 576, pressure data from the pressure sensor 566). The sensor monitoring system 130 may be configured to determine the duty cycle and/or the modulation frequency of the valve 502 based on the acceleration data from at least one of the accelerometer 575, the magnetometer 576, and/or the pressure sensor 566. In some embodiments, the sensor monitoring system 130 is configured to cross-check the determined the duty cycle and/or the modulation frequency determined based on one of the acceleration data from the accelerometer 575, magnetic data from the magnetometer 576, or pressure data from the pressure sensor 566 with data the accelerometer 575, the magnetometer 576, or the pressure sensor 566. In addition, the sensor monitoring system 130 may be configured to determine a corrected flowrate based on the duty cycle and/or the modulation frequency.

In some embodiments, the sensor monitoring system 130 (FIG. 1, FIG. 2, FIG. 4B) provides an indication of at least one of the flowrate of each nozzle assembly 500 (e.g., the corrected flowrate based on the duty cycle and/or the modulation frequency), the duty cycle of the associated valve 502, or the modulation frequency of the valve 502 to the I/O device 134 (e.g., to a graphical user interface (GUI) of the I/O device 134). Based on the displayed information, the operator of the crop sprayer 102 may provide instructions to the valve controller 124 (FIG. 1, FIG. 2, FIG. 4B) via the I/O device 122 of the control system 120 to adjust a flowrate of the fluid from the product tank 110, 416 (FIG. 1, FIG. 3, FIG. 4A, FIG. 4B) to the fluid distribution system 204 (FIG. 2) or the fluid distribution system 420 (FIG. 4B). In some embodiments, based on received instructions (e.g., from the operator received via the I/O device 122), the valve controller 124, may be configured to provide operating instructions to the fluid distribution system 204, 420. The instructions may include a desired flowrate of fluid to be provided to the nozzle assemblies 500, and/or operating instructions for a pump or valve associated with the fluid distribution system 204, 420 to adjust the flowrate of the fluid provided to the nozzle assemblies 500. In some embodiments, the control system 120 (e.g., the valve controller 124) receives a measured flowrate and the duty cycle and/or the modulation frequency of the valve 502 from the sensor monitoring system 130, and the control system 120 determines a corrected flowrate and/or provides control operations to the fluid distribution system (e.g., the fluid distribution system 204 (FIG. 2) or the fluid distribution system 420 (FIG. 4B)). In some embodiments, the valve 502 receives, from the valve controller 124 or from the sensor monitoring system 130, instructions indicative of a desired flowrate, duty cycle, and/or modulation frequency. Responsive to receiving the instructions, the flowrate is adjusted by controlling the operation of the valve 502 and/or the fluid distribution system. Based on a desired flowrate, the valve controller 124 provides operating instructions to the valve 502 to open and close at a particular duty cycle and modulation frequency. In other embodiments, the flowrate is adjusted by modifying an operation of one or more valves in the fluid distribution system 204, 420 and/or operation of a pump in fluid communication with the product tank 110, 416 and the nozzle assemblies 500.

Although the valve 502 has been described and illustrated as being associated with the nozzle assembly 500 for use in a crop sprayer 102, 300 (e.g., the sprayer nozzle assembly) or the agricultural implement 400 for use with the row units 410, the disclosure is not so limited. In some embodiments, the nozzle assembly 500 and/or the valve 502 are configured to provide flow of a gaseous material (e.g., ammonia) therethrough.

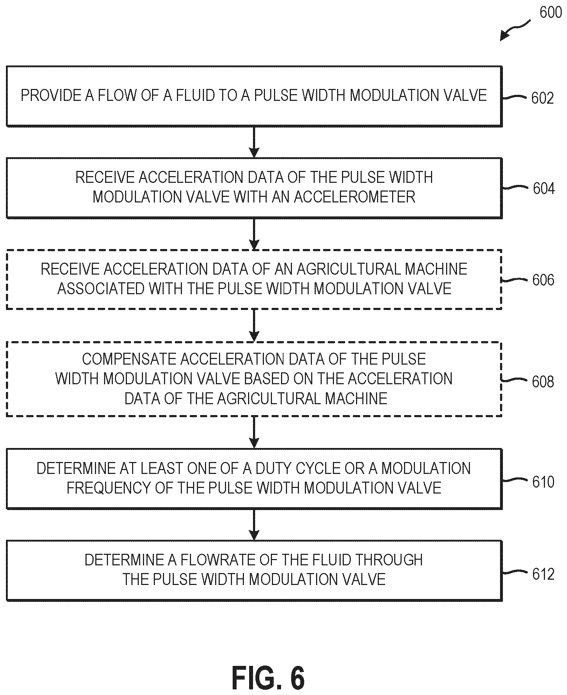

FIG. 6 is a simplified flow chart illustrating a method 600 of determining a duty cycle and a modulation frequency of a PWM valve (e.g., the valve 502) and (optionally) determining a flowrate through the PWM valve (e.g., through a nozzle assembly coupled to the PWM valve) based on at least one of the duty cycle or the modulation frequency. The method 600 includes providing a flow of a fluid to a PWM valve, as shown in act 602. The fluid may be provided to the PWM valve by, for example, pumping a fluid from a product tank (e.g., product tank 110, 416 (FIG. 1, FIG. 3, FIG. 4A) through a fluid distribution system 204, 420 (FIG. 2, FIG. 4B) to the PWM valve. The PWM valve may be a part of a nozzle assembly (e.g., nozzle assembly 500 (FIG. 5A through FIG. 5E) or otherwise part of a fluid distribution system (e.g., fluid distribution system 204, 420 (FIG. 2, FIG. 4B)).

Responsive to providing the flow of the fluid to the PWM valve, the method 600 includes receiving acceleration data of the PWM valve with an accelerometer, as shown in act 604. The acceleration data may also be referred to as "vibration data." The acceleration data of the PWM valve may be measured with an accelerometer (e.g., accelerometer 575 (FIG. 5B)) and received by, for example, a sensor monitoring system (e.g., sensor monitoring system 130 (FIG. 1, FIG. 2, FIG. 4B)). The accelerometer may be located within a sensor assembly (e.g., sensor assembly 506 (FIG. 5A through FIG. 5E) that is operably coupled to the PWM valve. In other embodiments, the accelerometer may be directly coupled to (e.g., may directly contact) the PWM valve, such as the actuator of the PWM valve. In other embodiments, the accelerometer is coupled to another component of a nozzle assembly (e.g., nozzle assembly 500 (FIG. 5A through FIG. 5E)) or of a fluid distribution system (e.g., fluid distribution system 204, 420 (FIG. 2, FIG. 4B)) including the PWM valve. As described above with reference to the accelerometer 575, an axis of the accelerometer may be aligned with a direction of travel of the PWM valve.

Responsive to receiving the vibration data of the PWM valve, the method 600 may optionally include receiving acceleration (e.g., vibration) data of an agricultural machine (e.g., crop sprayer 102, 302 (FIG. 1, FIG. 3), agricultural implement 400 (FIG. 4A)) associated with the PWM valve, as shown in act 606. For example, act 606 may include receiving acceleration data (e.g., vibration data) from an accelerometer operably coupled to a fluid distribution system (e.g., fluid distribution system 204, 420 (FIG. 2, FIG. 4B)) to which the PWM valve is coupled. In some embodiments, the acceleration data of the agricultural machine is measured with an accelerometer (e.g., accelerometer 114 (FIG. 1, FIG. 2, FIG. 3, FIG. 4A)) associated with the agricultural machine and provided to a sensor monitoring system (e.g., sensor monitoring system 130 (FIG. 1, FIG. 2, FIG. 4B)). In some embodiments, an axis of the accelerometer of the agricultural machine is aligned with (e.g., parallel with) an axis of the accelerometer associated with the PWM valve. In some embodiments, the accelerometer associated with the agricultural machine includes an axis that is aligned with (e.g., parallel with) a direction of travel of a component (e.g., a valve member, such as a stem) of the PWM valve.

Responsive to receiving the acceleration data of the agricultural machine, the method 600 optionally further includes compensating the acceleration data of the PWM valve based on the acceleration data of the agricultural machine, as shown in act 608. For example, in some embodiments, the acceleration data of the agricultural machine may be subtracted from the acceleration data of the PWM valve. In some embodiments, the acceleration data of the each of the agricultural machine and the PWM valve is in vector form and includes magnitude and direction data. In some embodiments, the acceleration data of the agricultural machine along the axis in which the PWM valve travels is subtracted from the acceleration data of the PWM valve along the axis. In some embodiments, compensating the acceleration data of the PWM valve includes subtracting the motion of the agricultural machine from the acceleration data. In some embodiments, the acceleration of the agricultural machine may be determined based on a derivative of the velocity of the agricultural machine. The velocity of the agricultural machine may be received or determined based on data from a GPS receiver (e.g., GPS receiver 136).

In some embodiments, compensating the acceleration data of the PWM valve includes ignoring (e.g., not considering) the acceleration data of the PWM valve at times when the acceleration data of the agricultural machine is greater than a threshold, corresponding to times when the agricultural machine is accelerating more than a predetermined amount, encountering one or more bumps or other obstructions causing excessive vibrations to the agricultural machine and the PWM valve. In other embodiments, compensating the acceleration data of the PWM valve includes reducing a weight of the acceleration data of the PWM valve when the acceleration data of the agricultural machine is more than a threshold value. The threshold value of the acceleration data of the agricultural machine may be the acceleration data in only one direction, such as along the axis in which the PWM valve travels. In other embodiments, the threshold value of the acceleration data of the agricultural machine includes the acceleration data in each of three mutually orthogonal axes.

Responsive to receiving the acceleration data of the PWM valve, the method 600 includes determining at least one of a duty cycle or a modulation frequency of the PWM valve, as shown in act 610. In some embodiments, act 610 includes determining the duty cycle of the PWM valve and/or the modulation frequency based on the acceleration data of the PWM valve. In some embodiments, act 610 includes determining the duty cycle and/or the modulation frequency based on the compensated acceleration data. The acceleration data and/or the compensated acceleration data may be analyzed to determine the duty cycle of the PWM valve.

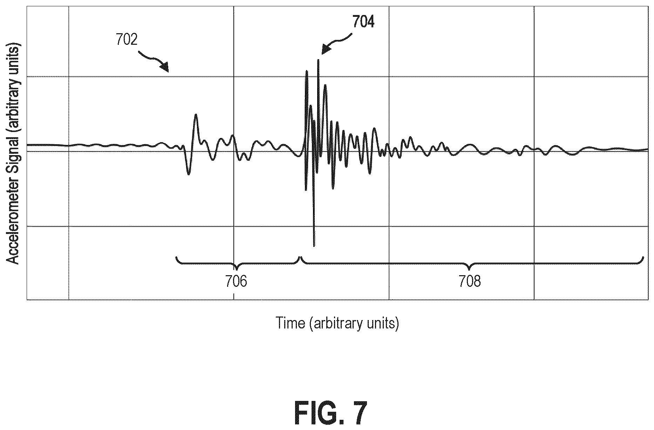

FIG. 7 is a graph illustrating the acceleration data of a PWM valve operating at a 90% duty cycle. FIG. 7 graphs the accelerometer signal (e.g., the voltage measured by the accelerometer) as a function of time. In FIG. 7, the relatively lower deviation from baseline in the accelerometer signal at region 702 corresponds to the closing of the solenoid and movement of the valve member towards the accelerometer. The accelerometer signal at region 704 corresponds to the opening of the solenoid and movement of the valve member away from the accelerometer. The PWM valve may be closed during interval 706 and may be open during interval 708. The accelerometer signal at region 704 corresponds to the vibration data of the PWM valve measured by the accelerometer when the PWM valve is closed (e.g., caused by actuation of the actuator of the PWM valve). Similarly, the accelerometer signal at interval 706 corresponds to the vibration data of the PWM valve measured by the accelerometer when the PWM valve is opened (e.g., caused by actuation of the actuator of the PWM valve). Thus, with reference to FIG. 7, the accelerometer signal is different when the PWM valve is pulsed open compared to when the PWM valve is pulsed closed.

In some embodiments, the duty cycle and the modulation frequency may be determined based on the percentage of time that the PWM valve is open and/or the percentage of time that the PWM valve is closed during operation of the PWM valve. The percentage of time may be determined by the duration of intervals 706, 708 between pulses of the actuator of the PWM valve. The modulation frequency may be determined based on the frequency that the valve is cycled open and closed. For example, the modulation frequency may be determined based on the frequency of the unique accelerometer signals when the PWM valve is opened or closed. The frequency may be based on the duration of interval 706 and the duration of interval 708 (e.g., modulation frequency (in Hz) = 1/(interval 706 (in seconds) + interval 708 (in seconds)).

In some embodiments, the duty cycle and the modulation frequency may be determined using a peak detector and/or a correlation between the acceleration data (e.g., the acceleration data or the compensated acceleration data) and the duty cycle and modulation frequency. By way of non-limiting example, a peak detector may be configured to determine peaks in the accelerometer data to determine when the accelerometer data corresponds to the PWM valve closing (e.g., as in region 702) based on the shape of the accelerometer data and to determine when the PWM valve is opening (e.g., as in region 704) based on the shape of the accelerometer data. In other embodiments, a duty cycle and modulation frequency are determined based on a correlation between the accelerometer data and the respective duty cycle and modulation frequency. The correlation may be determined in a laboratory or another location (e.g., remote from the agricultural machine) before installation on the agricultural machine. The correlation may be determined for a specific PWM valve or for a model of the PWM valve having the same dimensions. In some embodiments, the correlation may be determined on the sprayer (e.g., the crop sprayer) itself (e.g., at the control system 120 and/or the sensor monitoring system 130).

The method 600 may, optionally, further include, based on the duty cycle and/or the modulation frequency, determining a flowrate of the fluid through the pulse width modulation valve, as shown in act 612. For example, a measured flowrate may be determined with a flow sensor (e.g., flow sensor 518 (FIG. 5B through FIG. 5E)) of a sensor assembly (e.g., sensor assembly 506 (FIG. 5A through FIG. 5E)) associated with the PWM valve. The measured flowrate may be determined by, for example, measuring a frequency of a projectile in a sensor housing of the sensor assembly, as described above with reference to FIG. 5E. The measured flowrate may be compensated based on the duty cycle and/or the modulation frequency (e.g., based on each of the duty cycle and the modulation frequency) to determine a compensated flowrate.

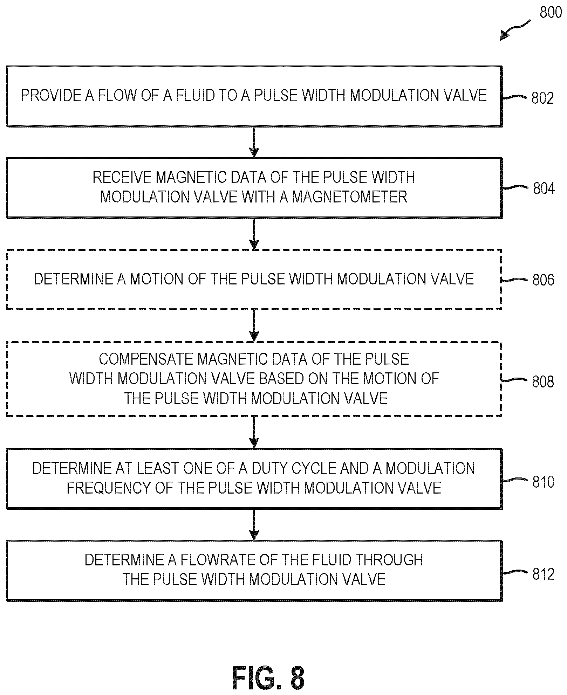

FIG. 8 is a simplified flow chart illustrating a method 800 of determining a duty cycle and a modulation frequency of a PWM valve (e.g., the valve 502) and (optionally) determining a flowrate through the PWM valve (e.g., through a nozzle assembly coupled to the PWM valve) based on the duty cycle and/or the modulation frequency. The method 800 includes providing a flow of a fluid to a PWM valve, as shown in act 802. Act 802 may be the same as or substantially the same as act 602.

Responsive to providing the flow of the fluid to the PWM valve, the method 800 includes receiving magnetic data of the PWM valve of with a magnetometer, as shown in act 804. The magnetic data may include at least one magnetic property measured by the magnetometer, such as a magnetic field, a magnetic field strength, a magnetic dipole moment, and/or a magnetic flux density. The magnetic data of the PWM valve may be measured with a magnetometer (e.g., magnetometer 576 (FIG. 5B)) and received by, for example, a sensor monitoring system (e.g., sensor monitoring system 130 (FIG. 1, FIG. 2, FIG. 4B)). In some embodiments, the magnetic data includes the magnetic field measured by the magnetometer. The magnetometer may be located within a sensor assembly (e.g., sensor assembly 506 (FIG. 5A through FIG. 5E) or directly coupled to the PWM valve, as described above with reference to the magnetometer 576. In other embodiments, the magnetometer is coupled to another component of a nozzle assembly (e.g., nozzle assembly 500 (FIG. 5A through FIG. 5E)) or of a fluid distribution system (e.g., fluid distribution system 204, 420 (FIG. 2, FIG. 4B)) including the PWM valve. As described above with reference to the magnetometer 576, an axis of the magnetometer may be aligned with a direction of travel of the PWM valve.

The method 800 may optionally include determining a motion of the PWM valve, as shown in act 806. For example, act 806 may include determining a motion of an agricultural machine (e.g., crop sprayer 102, 302 (FIG. 1, FIG. 3), agricultural implement 400 (FIG. 4A)) including a fluid distribution system including the PWM valve. Act 806 may include determining the motion of the PWM valve using a GPS receiver (e.g., GPS receiver 136 (FIG. 1)). In some embodiments, act 806 includes determining the motion of the PWM valve based on the magnetic data in directions that are not parallel to the direction of travel of a valve member (e.g., valve member 550 (FIG. 5B) of the PWM valve. For example, the motion of the PWM valve may be determined using magnetic data in directions perpendicular to the direction of travel of the valve member of the PWM valve.

Responsive to determining the motion of the PWM valve, the method 800 optionally further includes compensating the magnetic data of the PWM valve based on motion of the PWM valve, as shown in act 808. For example, the magnetic field of the Earth may be determined based on the location and/or orientation of the agricultural machine including the PWM valve. The magnetic field of the Earth may be determined based on the location and/or orientation of the agricultural machine, which may be based on the data from the GPS receiver. The magnetic field of the Earth at each location may be subtracted from the magnetic data at each location. In other embodiments, magnetic data measured with another magnetometer (e.g., magnetometer 115 (FIG. 1, FIG. 1, FIG. 3, FIG. 4A) may be subtracted from the magnetic data measured by the magnetometer of the PWM valve to compensate the magnetic data measured by the magnetometer operably coupled to the PWM valve for the magnetic field of the Earth and/or other magnetic interference (e.g., magnetism not caused by actuation of the PWM valve). In some embodiments, the magnetic data of the agricultural machine along the axis in which the PWM valve travels is subtracted from the magnetic data of the PWM valve along the axis.

In some embodiments, compensating the magnetic data of the PWM valve includes ignoring (e.g., not considering) the magnetic data of the PWM valve at times when the magnetic data of the PWM valve is greater than a threshold, corresponding to when the PWM valve encounters a large magnetic field independent from the actuator thereof. The threshold value of the magnetic data of the PWM valve may be the magnetic data in only one direction, such as along the axis in which the PWM valve travels, or may include the magnetic data in each of three mutually orthogonal axes.

Responsive to receiving the magnetic data of the PWM valve, the method 800 includes determining a duty cycle and/or a modulation frequency of the PWM valve, as shown in act 810. In some embodiments, act 810 includes determining the duty cycle of the PWM valve and/or the modulation frequency based on the magnetic data of the PWM valve. In some embodiments, act 810 includes determining the duty cycle and/or the modulation frequency based on the compensated magnetic data. The magnetic data and/or the compensated magnetic data may be analyzed to determine the duty cycle of the PWM valve.

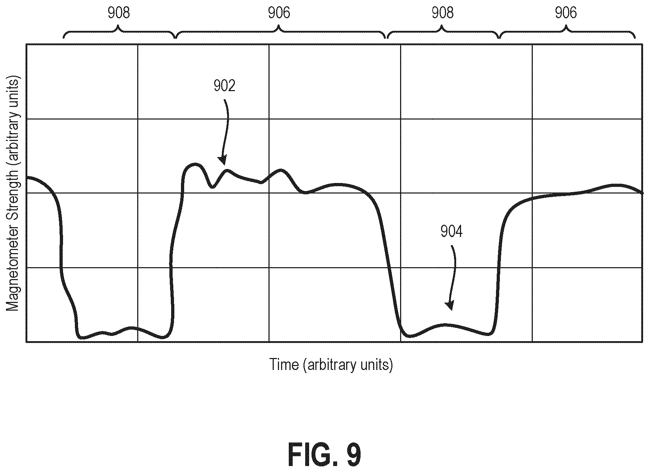

FIG. 9 is a graph illustrating the magnetic data of a PWM valve operating at a 75% duty cycle. FIG. 9 graphs the magnetometer signal (e.g., the voltage measured by the magnetometer) as a function of time. The magnetometer signal may correspond to a magnetic field measured by the magnetometer. In FIG. 9, regions 902 wherein the magnetic signal is greater than a threshold (e.g., greater than zero) correspond to durations 906 when the PWM valve is open and regions 904 where the magnetic signal is about zero correspond to durations 908 when the PWM valve is closed. As shown in FIG. 9, when the PWM valve is open, the magnetometer measures a magnetic field greater than a threshold and when the PWM valve is closed, the magnetometer measures a relatively lower magnetic field (e.g., lower than the threshold; a magnetic field of about zero).

In some embodiments, the duty cycle and the modulation frequency may be determined based on the percentage of time that the PWM valve is open and/or the percentage of time that the PWM valve is closed during operation of the PWM valve. The percentage of time may be determined by the durations 906, 908. The modulation frequency may be determined based on the frequency that the valve is cycled open and closed. For example, the modulation frequency may be determined based on the frequency of the when the PWM valve is opened or closed, determined based on the durations 906, 908. The frequency may be based on the duration 906 and the duration 908 (e.g., modulation frequency (in Hz) = 1/(duration 906 (in seconds) + duration 908 (in seconds)).

In some embodiments, the duration 906 that the PWM valve is open may be determined using a peak detector. The peak detector may be configured to determine when the magnetic signal is greater than a threshold value, corresponding to when the PWM valve is open.

The method 800 may, optionally, further include, based on the duty cycle and/or the modulation frequency, determining a flowrate of the fluid through the pulse width modulation valve, as shown in act 812. Act 812 may be substantially the same or the same as act 612 described above with reference to FIG. 6.

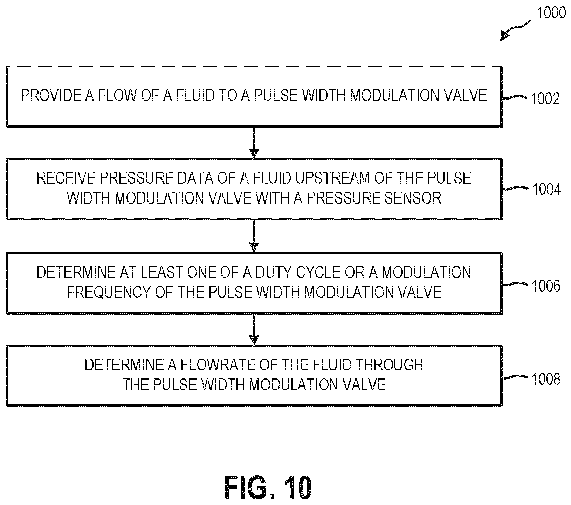

FIG. 10 is a simplified flow chart illustrating a method 1000 of determining a duty cycle and a modulation frequency of a PWM valve (e.g., the valve 502) and (optionally) determining a flowrate through the PWM valve (e.g., through a nozzle assembly coupled to the PWM valve) based on the duty cycle and/or the modulation frequency. The method 1000 includes providing a flow of a fluid to a PWM valve, as shown in act 1002. Act 1002 may be the same as or substantially the same as act 602.

Act 1004 includes receiving pressure data of a fluid upstream of the PWM valve with a pressure sensor, as shown in act 1004. The pressure sensor may be substantially the same as the pressure sensor 566 (FIG. 5B, FIG. 5E) and may be located in a sensor housing (e.g., sensor housing 510 (FIG. 5B)). The pressure sensor may measure the pressure of the fluid in the sensor housing prior to the fluid passing through the PWM valve.

Responsive to receiving pressure data, the method 1000 includes determining a duty cycle and/or a modulation frequency of the PWM valve, as shown in act 1006. In some embodiments, act 1006 includes determining the duty cycle of the PWM valve and/or the modulation frequency based on the pressure data of the fluid in the sensor housing upstream of the PWM valve. The pressure data may be analyzed to determine the duty cycle of the PWM valve.

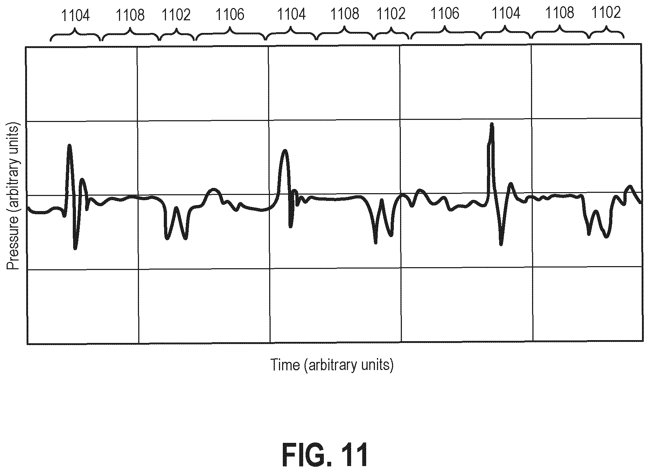

FIG. 11 is a graph illustrating the pressure of the fluid in the sensor housing of a nozzle assembly including the sensor housing and a PWM valve operating at a 50% duty cycle. As shown in FIG. 11, opening and closing of the PWM valve may be detected based on the measured pressure and, for example, the shape of the pressure wave. In some embodiments, the shape of the pressure wave may be used to determine opening and closing of the PWM valve. For example, regions 1102 may correspond to closing of the PWM valve, and regions 1104 may correspond to opening of the PWM valve. In some embodiments, responsive to opening of the PWM valve (corresponding to regions 1102), the pressure of the fluid may temporarily decrease, and responsive to closing of the PWM valve (corresponding to regions 1104) the pressure of the fluid may temporarily increase.

The duration that the PWM valve is open may be determined based on the time between when the PWM valve is opened and when the PWM valve is closed, corresponding to durations 1106. Similarly, the duration that the PWM valve is closed may be determined based on the time between when the PWM valve is closed and when the PWM valve is opened, corresponding to durations 1108. The modulation frequency may be determined based on the frequency between opening and closing of the PWM valve. The duty cycle may be determined based on the amount of time the valve is on (e.g., the percentage of time of duration 1106 compared to the total duration of operation of the PWM valve).

In some embodiments, the opening and closing of the PWM valve may be determined using one or more of an algorithm, pattern recognition, a peak detector, or another method. In some embodiments, the opening and closing of other PWM valves of nozzle assemblies (e.g., nozzle assemblies 500 (FIG. 5A, FIG. 5B)) of a fluid distribution system (e.g., fluid distribution system 204 (FIG. 2), fluid distribution system 420 (FIG. 4B)) may not substantially affect the pressure measured by the pressure sensor of the PWM valve.

The method 1000 may, optionally, further include, based on the duty cycle and/or the modulation frequency, determining a flowrate of the fluid through the pulse width modulation valve, as shown in act 1008. Act 1008 may be substantially the same or the same as act 612 described above with reference to FIG. 6.

With reference to the methods 600, 800, 1000, in some embodiments, the duty cycle and/or the modulation frequency of the PWM valve may be determined without flowing fluid through the PWM valve. In some such embodiments, the accelerometer, the magnetometer, or the pressure sensor may measure the respective vibrations, magnetic property, or pressure caused by opening and closing of the PWM valve and the duty cycle and/or the modulation frequency may be determined based on the measured data.

In some embodiments, the sensor monitoring system 130 (FIG. 1, FIG. 2, FIG. 4B) may be configured to determine the duty cycle and/or the modulation frequency based on at least one of the acceleration data (e.g., using method 600), the magnetic data (e.g., using method 800), or the pressure data (e.g., using method 1000); and may determine the duty cycle and/or the modulation frequency based on another one of the acceleration data, the magnetic data, or the pressure data. In some such embodiments, the sensor monitoring system 130 may use the accelerometer 575, the magnetometer 576, and the pressure sensor 566 to cross-check one another and determine an accuracy of the determined duty cycle and/or modulation frequency. In some embodiments, the sensor monitoring system 130 determines the duty cycle and/or the modulation frequency with data from each of the accelerometer 575, the magnetometer 576, and the pressure sensor 566.

In addition, at least one operating condition of the PWM valve may be determined based on the duty cycle and/or the modulation frequency. In some embodiments, the duty cycle and/or the modulation frequency is compared to an instruction flowrate and compared to an expected duty cycle and/or modulation frequency for the instruction flowrate to determine whether there is a blockage in the PWM valve. The measured flowrate of the fluid through the valve 502 may be compared to the duty cycle to determine whether there is a blockage. In some embodiments, the duty cycle of each valve 502 may be compared to the duty cycle of other valves (e.g., neighboring valves 502) to determine whether there is a blockage in the valve 502 and/or the fluid distribution system (e.g., the fluid distribution system 204 of the boom arm 202 or the fluid distribution system 420). If a valve 502 exhibits the same duty cycle and a different flowrate (e.g., more than a predetermined percentage different) than other valves 502, the sensor monitoring system 130 may determine that there is a blockage in the fluid distribution system and/or in the valve 502.

FIG. 12 is a schematic view of a computer device 1202. In some embodiments, each of the control system 120 (FIG. 1, FIG. 2, FIG. 4B) and the sensor monitoring system 130 includes a computer device such as the computer device 1202 of FIG. 12. The computer device 1202 may include a communication interface 1204, at least one processor 1206, a memory 1208, a storage device 1210, an input/output device 1212, and a bus 1214. The computer device 1202 may be used to implement various functions, operations, acts, processes, and/or methods disclosed herein, such as one or more of the methods 600, 800, 1000.

The communication interface 1204 may include hardware, software, or both. The communication interface 1204 may provide one or more interfaces for communication (such as, for example, packet-based communication) between the computer device 1202 and one or more other computing devices or networks (e.g., a server). As an example, and not by way of limitation, the communication interface 1204 may include a network interface controller (NIC) or network adapter for communicating with an Ethernet or other wire-based network or a wireless NIC (WNIC) or wireless adapter for communicating with a wireless network, such as a Wi-Fi.

The at least one processor 1206 may include hardware for executing instructions, such as those making up a computer program. By way of non-limiting example, to execute instructions, the at least one processor 1206 may retrieve (or fetch) the instructions from an internal register, an internal cache, the memory 1208, or the storage device 1210 and decode and execute them to execute instructions. In some embodiments, the at least one processor 1206 includes one or more internal caches for data, instructions, or addresses. The at least one processor 1206 may include one or more instruction caches, one or more data caches, and one or more translation look aside buffers (TLBs). Instructions in the instruction caches may be copies of instructions in the memory 1208 or the storage device 1210.

The memory 1208 may be coupled to the at least one processor 1206. The memory 1208 may be used for storing data, metadata, and programs for execution by the processor(s). The memory 1208 may include one or more of volatile and non-volatile memories, such as Random-Access Memory ("RAM"), Read-Only Memory ("ROM"), a solid state disk ("SSD"), Flash, Phase Change Memory ("PCM"), or other types of data storage. The memory 1208 may be internal or distributed memory.

The storage device 1210 may include storage for storing data or instructions. As an example, and not by way of limitation, storage device 1210 may include a non-transitory storage medium described above. The storage device 1210 may include a hard disk drive (HDD), Flash memory, an optical disc, a magneto-optical disc, magnetic tape, or a Universal Serial Bus (USB) drive or a combination of two or more of these. The storage device 1210 may include removable or non-removable (or fixed) media, where appropriate. The storage device 1210 may be internal or external to the storage device 1210. In one or more embodiments, the storage device 1210 is non-volatile, solid-state memory. In other embodiments, the storage device 1210 includes read-only memory (ROM). Where appropriate, this ROM may be mask programmed ROM, programmable ROM (PROM), erasable PROM (EPROM), electrically erasable PROM (EEPROM), electrically alterable ROM (EAROM), or Flash memory or a combination of two or more of these.

The storage device 1210 may include machine-executable code stored thereon. The storage device 1210 may include, for example, a non-transitory computer-readable storage medium. The machine-executable code includes information describing functional elements that may be implemented by (e.g., performed by) the at least one processor 1206. The at least one processor 1206 is adapted to implement (e.g., perform) the functional elements described by the machine-executable code. In some embodiments the at least one processor 1206 may be configured to perform the functional elements described by the machine-executable code sequentially, concurrently (e.g., on one or more different hardware platforms), or in one or more parallel process streams.

When implemented by the at least one processor 1206, the machine-executable code is configured to adapt the at least one processor 1206 to perform operations of embodiments disclosed herein. For example, the machine-executable code may be configured to adapt the at least one processor 1206 to perform at least a portion or a totality of any of the methods 600, 800, 1000 of FIG. 6, FIG. 8, and FIG. 10. As another example, the machine-executable code may be configured to adapt the at least one processor 1206
to perform at least a portion or a totality of the operations discussed for an agricultural machine, such as the crop sprayer 102, 302 (FIG. 1, FIG. 3) or the agricultural implement 400 (FIG. 4A), the nozzle assembly 206 (FIG. 2) or the fluid distribution system 204, 420 (FIG. 2, FIG. 4B). As a specific, non-limiting example, the machine-executable code may be configured to adapt the at least one processor 1206 to cause the sensor monitoring system 130 of the crop sprayer 102, 302 or the agricultural implement 400 to determine at least one of a duty cycle and/or a modulation frequency of PWM valves thereof, or a flowrate (e.g., a corrected flowrate) of a fluid through the PWM valves.

The input/output device 1212 may correspond to the input/output device 122 and/or the input/output device 134 of FIG. 1, FIG. 2, and FIG. 4B and may allow an operator of the crop sprayer 102, 302 or agricultural implement 400 to provide input to, and receive output from, the computer device 1202. The input/output device 1212 may include a mouse, a keypad or a keyboard, a joystick, a touch screen, a camera, an optical scanner, network interface, modem, other known I/O devices, or a combination of such I/O interfaces.

In some embodiments, the bus 1214 *(e.g.,* a Controller Area Network (CAN) bus, an ISOBUS (ISO 11783 Compliant Implement Control)) may include hardware, software, or both that couples components of computer device 1202 to each other and to external components.

All references cited herein are incorporated herein in their entireties. If there is a conflict between definitions herein and in an incorporated reference, the definition herein shall control.

While the present disclosure has been described herein with respect to certain illustrated embodiments, those of ordinary skill in the art will recognize and appreciate that it is not so limited. Rather, many additions, deletions, and modifications to the illustrated embodiments may be made without departing from the scope of the disclosure as hereinafter claimed, including legal equivalents thereof. In addition, features from one embodiment may be combined with features of another embodiment while still being encompassed within the scope as contemplated by the inventors. Further, embodiments of the disclosure have utility with different and various machine types and configurations.

## Claims

1. An agricultural machine, comprising:
a chassis;
a product tank containing a fluid;
a fluid distribution system in fluid communication with the product tank, the fluid distribution system comprising:
at least one fluid outlet line configured to deliver a fluid to an agricultural field;
at least one pulse width modulation valve in fluid communication with the at least one fluid outlet line; and
at least one pressure sensor upstream of the at least one pulse width modulation valve, the at least one pressure sensor configured to measure a fluid pressure proximate the at least one pulse width modulation valve; and
a monitoring system configured to determine at least one of a duty cycle or a modulation frequency of the at least one pulse width modulation valve based on the fluid pressure.

2. The agricultural machine of claim 1, further comprising a boom comprising at least one boom arm configured to laterally extend from the chassis, wherein the at least one fluid outlet line is operably coupled to the at least one boom arm.

3. The agricultural machine of claim 2, wherein:
the at least one pulse width modulation valve comprises a plurality of pulse width modulation valves; and
the at least one boom arm comprises a plurality of sprayer nozzle assemblies, each sprayer nozzle assembly operably coupled to one of the pulse width modulation valves of the plurality of pulse width modulation valves.

4. The agricultural machine of claim 3, wherein each sprayer nozzle assembly comprises a flow sensor; optionally wherein the flow sensor comprises an optical sensor configured to measure a frequency about which a projectile rotates within a housing of the sprayer nozzle assembly.

5. The agricultural machine of any one of claims 1 through 4, further comprising at least one of:
an accelerometer configured to measure an acceleration of the at least one pulse width modulation valve; or
a magnetometer configured to measure at least one magnetic property caused by actuation of the at least one pulse width modulation valve.

6. The agricultural machine of claim 5, wherein the monitoring system is configured to determine the at least one of the duty cycle or the modulation frequency of the at least one pulse width modulation valve based on at least one of the acceleration of the at least one pulse width modulation valve or the at least one magnetic property.

7. The agricultural machine of claim 6, wherein the monitoring system is configured to compare the at least one of the duty cycle or the modulation frequency based on the fluid pressure to the at least one of the duty cycle or the modulation frequency based the at least one of the acceleration of the at least one pulse width modulation valve or the at least one magnetic property.

8. The agricultural machine of any one of claims 1, 2 or 5 to 7, wherein:
the at least one fluid outlet line comprises a plurality of fluid outlet lines; and
the at least one pulse width modulation valve comprises a plurality of pulse width modulation valves, each fluid outlet line individually in fluid communication with one of the pulse width modulation valves.

9. The agricultural machine of claim 8, wherein the at least one pressure sensor comprises a plurality of pressure sensors, each pressure sensor operably coupled to and upstream of a pulse width modulation valve of the plurality of pulse width modulation valves.

10. A method of operating a pulse width modulation valve, the method comprising:
measuring pressure data indicative of a fluid pressure with a pressure sensor upstream of a pulse width modulation valve, the pulse width modulation valve in fluid communication with a fluid distribution line; and
based on the measured pressure data, determining at least one of a duty cycle or a modulation frequency of the pulse width modulation valve.

11. The method of claim 10, wherein measuring pressure data comprises measuring the fluid pressure with a pressure sensor between the pulse width modulation valve and an inlet of a sensor housing in fluid communication with the fluid distribution line.

12. The method of claim 10 or claim 11, further comprising measuring a flowrate of the fluid to determine a measured flowrate; , further comprising determining a corrected flowrate based on the measured flowrate and the at least one of the duty cycle or the modulation frequency of the pulse width modulation valve.

13. The method of any one of claims 10 through 12, further comprising measuring at least one of vibrations of the pulse width modulation valve or at least one magnetic property caused by actuation of the pulse width modulation valve.

14. The method of claim 13, further comprising comparing the at least one of the duty cycle or the modulation frequency determined based on the fluid pressure to at least one of a duty cycle or a modulation frequency determined based on at least one of the vibrations or the at least one magnetic property.

15. The method of any one of claims 10 through 14, further comprising:
measuring, with a pressure sensor, a fluid pressure within each of a plurality of sensor assemblies each located upstream of a respective pulse width modulation valve; and
based on the fluid pressure of each of the sensor assemblies, determining at least one of a duty cycle or a modulation frequency of the respective pulse width modulation valves.
